# EUROPEAN PATENT SPECIFICATION

(11) **EP 3 836 718 B1**
(45) Date of publication and mention of the grant of the patent: **11.03.2026**
(21) Application number: 18929176.8
(22) Date of filing: 09.08.2018
(51) Int. Cl.: H04W 74/08, H04W 72/04, H04L 5/00, H04B 7/06, H04W 74/0833

(54) **USER DEVICE, METHOD FOR A USER DEVICE AND COMMUNICATION SYSTEM**
BENUTZERVORRICHTUNG, VERFAHREN FÜR EINE BENUTZERVOORICHTUNG UND KOMMUNIKATIONSSYSTEM
DISPOSITIF UTILISATEUR, PROCÉDÉ POUR UN DISPOSITIF UTILISATEUR ET SYSTÈME DE COMMUNICATION

(43) Date of publication of application: 16.06.2021
(73) Proprietor: NTT DOCOMO, INC., Chiyoda-ku Tokyo 100-6150 (JP)
(72) Inventor: OHARA, Tomoya, Tokyo 100-6150 (JP)
(74) Representative: Hoffmann Eitle
(86) International application number: PCT/JP2018/030003
(87) International publication number: WO 2020/031359

(56) References cited:
- EP-A1- 3 637 669
- EP-A1- 3 641 461
- EP-A1- 3 657 725
- US-A1- 2020 045 569
- ERICSSON: "Feature lead summary 1 for beam measurement and reporting", vol. RAN WG1, no. Busan; 20180521 - 20180525, 24 May 2018 (2018-05-24), XP051463264, Retrieved from the Internet <URL:http://www.3gpp.org/ftp/tsg%5Fran/WG1%5FRL1/TSGR1%5F93/Docs> [retrieved on 20180524]
- ZTE: "Remaining issues on QCL", 3GPP TSG RAN WG1 MEETING #93 RL-1805836, 25 May 2018 (2018-05-25), XP051441056
- NTT DOCOMO: "TCI state for PDCCH", 3GPP TSG RAN WG1 MEETING #93 RL-1807839, 25 May 2018 (2018-05-25), XP051463441

## Description

### BACKGROUND OF THE INVENTION

### 1. Field of the Invention

The disclosure herein generally relates to a terminal, a method and a communication system.

### 2. Description of the Related Art

In the NR (New Radio) (also referred to as the "5G"), which is a successor system of the LTE (Long Term Evolution), techniques that satisfy required conditions such as a large-capacity system, a high-speed data transmission rate, low delay, simultaneous connection of large number of terminals, low cost, power saving, or the like have been discussed (refer to, for example, non-patent document 1).

In the NR, a frequency band higher than that of the LTE is used. Because in the higher frequency band a propagation loss increases, an application of a beam forming with a narrow beam width to wireless communication signals for enhancing a reception power in order to compensate for the propagation loss has been discussed (refer to, for example, non-patent document 2).

### [Citation list]

### [Non Patent Literature]

[NPL 1] 3GPP TS 38.300 V15.2.0 (2018-06)
[NPL 2] 3GPP TS 38.211 V15.2.0 (2018-06)

ERICSSON: "Feature lead summary 1 for beam measurement and reporting", 3GPP DRAFT; R1-1807652 relates to proposals relating to beam measurement and reporting made in the 3GPP TSG-RAN WG1.

### [Patent Literature]

EP 3641461 A1 relates to a method for determining a transmission configuration indicator TCI for a terminal in a wireless communication system and a device employing the method.

EP 3637669 A1 relates to a method for receiving a signal in a control resource set (CORESET) of a wireless communication system and a user equipment using the method. The method includes receiving a radio resource control signal including a plurality of transmission configuration indicator TCI states, receiving a medium access control control element and receiving a signal in the CORESET based on the one TCI state.

EP 3657725 A1 relates to a method for monitoring a control signal of a user equipment. The method includes selecting at least one control resource set among a plurality of CORESETs when physical downlink control channel monitoring occasions in the plurality of CORESETs are overlapped and monitoring a PDCCH only in the selected at least one control resource set.

### SUMMARY OF THE INVENTION

### [Technical Problem]

In the wireless communication system of the NR, a control resource set (CORESET) associated with a plurality of beams is sent from a base station apparatus to a user device. It has not been made clear at what time a beam associated with the control resource set is switched and a monitoring of a control signal is performed.

The present invention has been made in view of such a problem, and it is an object of the present invention to appropriately perform, by the user device, monitoring of the control signal sent from the base station apparatus.

### [Means for solving the problem]

The object of the invention is achieved by the subject-matter of the independent claims. Advantageous embodiments are defined in the dependent claims. Further examples are provided for facilitating the understanding of the invention.

According to a disclosed technique, a user device including a control unit configured to determine a control resource set, a search space, and a transmission control indication state corresponding to a control signal to be monitored, the determination being based on information regarding a setting for receiving the control signal; and a reception unit configured to switch the transmission control indication state during an execution of a random access procedure, and to monitor a control signal corresponding to the control resource set in the search space, is provided.

### [Effects of the invention]

According to the disclosed technique, in a wireless communication system, a user device can properly monitor a control signal transmitted from a base station apparatus.

### BRIEF DESCRIPTION OF THE DRAWINGS

FIG. 1 is a diagram for describing a wireless communication system according to an embodiment of the present invention.
FIG. 2 is a diagram depicting an example of monitoring a control signal according to the embodiment of the present invention.
FIG. 3 is a sequence diagram depicting an example of monitoring a control signal according to the embodiment of the present invention.
FIG. 4 is a flowchart depicting an example of monitoring a control signal according to the embodiment of the present invention.
FIG. 5 is a diagram depicting an example of a function configuration of a base station apparatus 10 according to the embodiment of the present invention.
FIG. 6 is a diagram depicting an example of a function configuration of a user device 20 according to the embodiment of the present invention.
FIG. 7 is a diagram depicting an example of a hardware structure of the base station apparatus 10 or the user device 20 according to the embodiment of the present invention.

### DETAILED DESCRIPTION OF THE PREFERRED EMBODIMENTS

An embodiment of the present invention will be described with reference to the drawings below. Note that the embodiment described below is an example, and an embodiment to which the present invention is applied is not limited to the embodiment below.

For operations of the wireless communication system of the embodiment of the present invention, a conventional technique is appropriately used. However, although the conventional technique is, for example, a conventional LTE, the conventional technique is not limited to the conventional LTE. Moreover, the term "LTE" used in the specification of the present application is assumed to have a broad meaning including the LTE-advanced and a system after the LET-advanced (e.g. NR), unless otherwise stated.

Moreover, in the embodiment of the present invention described below, terms used in the existing LTE, such as SS (Synchronization signal), PSS (Primary SS), SSS (Secondary SS), PBCH (Physical Broadcast channel), PRACH (Physical random access channel), or the like will be used. This is for convenience of description, and the same signal, function and the like as these terms may be referred to other names. Moreover, the described terms in the NR correspond to NR-SS, NR-PSS, NR-SSS, NR-PBCH, NR-PRACH and the like. However, even if a signal is used in the NR, the signal is not always referred to as "NR-".

Moreover, in the embodiment of the present invention, a duplex system may be a TDD (Time Division Duplex) system, a FDD (Frequency Division Duplex) system, or other systems (e.g. Flexible Duplex).

Moreover, in the description below, a method of transmitting signals using a transmission beam may be a digital beam forming that transmits a signal multiplied by a precoding vector (precoded with a precoding vector), or may be an analog beam forming that achieves a beam forming using a variable phase shifter in an RF (Radio Frequency) circuit. Similarly, a method of receiving signals using a reception beam may be a digital beam forming that multiplies received signals by a predetermined weight vector, or may be an analog beam forming that achieves a beam forming using a variable phase shifter in the RF circuit. A hybrid beam forming, in which a digital beam forming is combined with an analog beam forming, may be applied. Moreover, transmitting signals using a transmission beam may be transmitting signals at a certain antenna port. Similarly, receiving signals using a reception beam may be receiving signals at a certain antenna port. The antenna port refers to a logical antenna defined in the 3GPP standard or a physical antenna port.

Note that a method of forming a transmission beam and a reception beam is not limited to the described method. For example, a method of changing an angle of each antenna of a plurality of antennas in a base station apparatus 10 or a user device 20 that includes the plurality of antennas may be used. A method in which a method using a precoding vector is combined with the method of changing an angle of an antenna may be used. Different antenna panels may be used by switching. A method in which a method of combining and using a plurality of antenna panels is combined may be used. Other methods may be used. Moreover, for example, in a high frequency band, a plurality of transmission beams that are different from each other may be used. Using a plurality of transmission beams is referred to as a multibeam operation. Using a single transmission beam is referred to as a single beam operation.

Moreover, in the embodiment of the present invention, "configuring a wireless parameter or the like" may be referred to as pre-configuring a predetermined value, or may be referred to as configuring a wireless parameter indicated by the base station apparatus 10 or the user device 20.

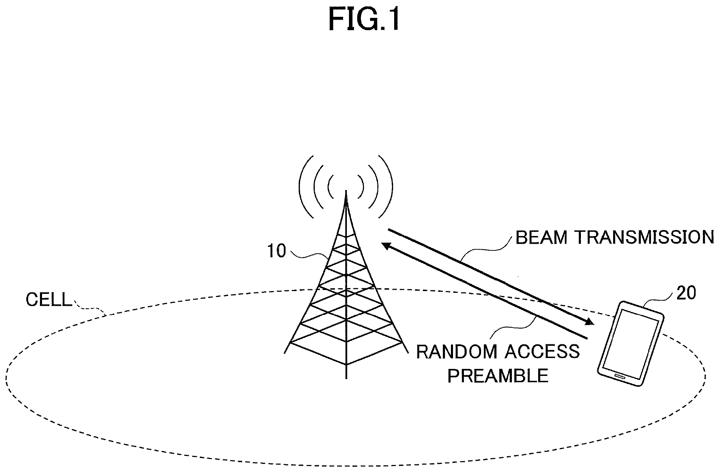

FIG. 1 is a diagram for describing the wireless communication system according to the embodiment of the present invention. The wireless communication system according to the embodiment of the present invention includes, as illustrated in FIG. 1, the base station apparatus 10 and the user device 20. In FIG. 1, one base station apparatus 10 and one user device 20 are shown. However, FIG. 1 is an example, and a plurality of base station apparatuses 10 or a plurality of user devices 20 may be present.

The base station apparatus 10 is a communication apparatus that provides one or more cells, and wirelessly communicates with the user device 20. A physical resource of a wireless signal is defined in a time region and a frequency region. The time region may be defined by an OFDM symbol number. The frequency region may be defined by a sub carrier number or a resource block number. The base station apparatus 10 transmits a synchronization signal and system information to the user device 20. The synchronization signal is, for example, an NR-PSS and an NR-SSS. A part of the system information is transmitted, for example, in an NR-PBCH, and is also referred to as notice information. The synchronization signal and the notice information may be periodically transmitted as an SS block including a predetermined number of OFDM symbols (SS/PBCH block). The base station apparatus 10 transmits a control signal or data to the user device 20 in DL (Downlink), and receives a control signal or data from the user device 20 in UL (Uplink). Both the base station apparatus 10 and the user device 20 can perform a beam forming to transmit/receive signals.

The user device 20 is a communication device including a wireless communication function, such as a smartphone, a mobile phone, a tablet, a wearable terminal, or a communication module for an M2M (Machine-to-Machine). The user device 20 uses various communication services provided by the wireless communication system by receiving a control signal or data from the base station apparatus 10 in DL and transmitting a control signal or data to the base station apparatus 10 in UL.

As illustrated in FIG. 1, the base station apparatus 10 transmits a signal, to which the beam forming is applied, to the user device 20. Moreover, as illustrated in FIG. 1, the user device 20 transmits a random access preamble to the base station apparatus 10, to execute a random access procedure.

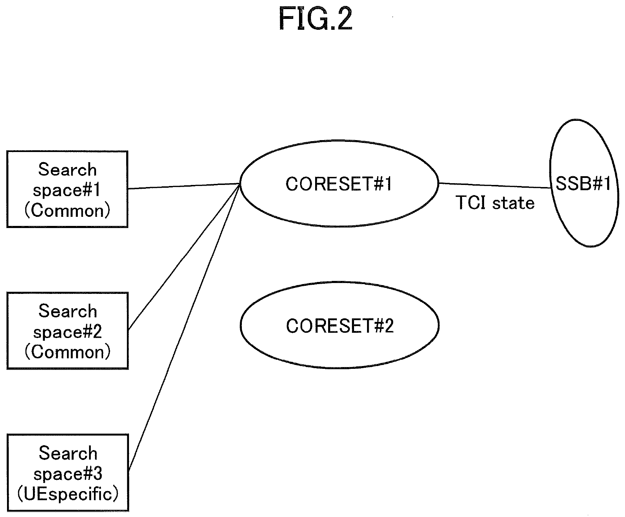

FIG. 2 is a diagram for explaining an example of monitoring a control signal in the embodiment of the present invention. In the NR, an antenna port is defined as being capable of estimating a channel, in which a symbol is transmitted at the antenna port, from a channel, in which another symbol is transmitted at the antenna port. Two antenna ports being QCL (quasi co-located) means that, for example, propagation path characteristics including a delay spread, a Doppler spread, a Doppler shift, an average gain, an average delay or a space reception parameter, of one antenna port can be estimated from propagation path characteristics of another antenna port.

Here, for example, when an SS block and a CSI-RS (Channel State Information Reference Signal) are QCL, the user device 20 assumes that the SS block is transmitted from the base station apparatus 10 in the same DL beam as that of the CSI-RS, and the user device 20 can receive the SS.

Moreover, the in the NR, a TCI (Transmission configuration indicator) state is defined. The TCI state indicates a QCL relation of a DL reference signal. One or more TCI states are included in an RRC (Radio Resource Control) signaling that sets a control resource set. The DL reference signal is a SS block or a CSI-RS. That is, by a control resource set, any of the TCI states is applied, and a DL reference signal corresponding to the TCI state is determined. For example, in an example shown in FIG. 2, CORESET#1 is associated with SSB#1 by a TCI state. "CORESET" indicates a control resource set. "SSB" indicates an SS block.

Moreover, a search space for monitoring the control signal is associated with the control resource set. In the example shown in FIG. 2, Searchspace#1, Searchspace#2, and Searchspace#3 are all associated with CORESET#1. By an RRC signaling that set the search space, the association between the search space and the control resource set is indicated to the user device 20. The user device 20 monitors the control signal corresponding to the control resource set in the search space. Moreover, when a plurality of TCI states are set by the RRC signaling, the TCI states may be dynamically switched by DCI (Downlink control information).

One of the search spaces is a ra-SearchSpace used in a random access procedure. When monitoring the ra-SearchSpace, in an assumption of the QCL, for a non-conflict type random access by an PDCCH (Physical Downlink Control Channel) order, the ra-SearchSpace is assumed to be QCL with the SS block or the CSI-RS that are assumed in the reception of the PCDDH order, and otherwise the ra-SearchSpace is assumed to be QCL with the SS block or the CSI-RS that are selected by the user device 20 when transmitting the PRACH. Note that the ra-SearchSpace is a search space classified into the Type 1 PDCCH common search space.

One of the control resource sets is an RMSI (Remaining minimum system information) including system information required for communication, or CORESET#0 for receiving a paging or the like. The CORESET#0 is a control resource set associated with a Type0 PDCCH common search space. The CORESET#0 defines a timing for monitoring in each of all the SS blocks transmitted from the base station apparatus 10. That is, in the CORESET#1, different from other control resource sets, based on the timing for monitoring, the QCL with the corresponding SS block is assumed. The timing for monitoring of the CORESET#0 may be also be referred to as Searchspace#0.

Here, switching of the TCI state of the CORESET#0 based on the SS block or the CSI-RS selected for transmitting the PRACH in the random access procedure has been considered. That is, the SS block or the CSI-RS, based on which the timing for monitoring of the CORESET#0 and the assumption of the QCL are determined, is switched. When the TCI state is switched during the execution of the random access procedure, a timing for switching has not been defined.

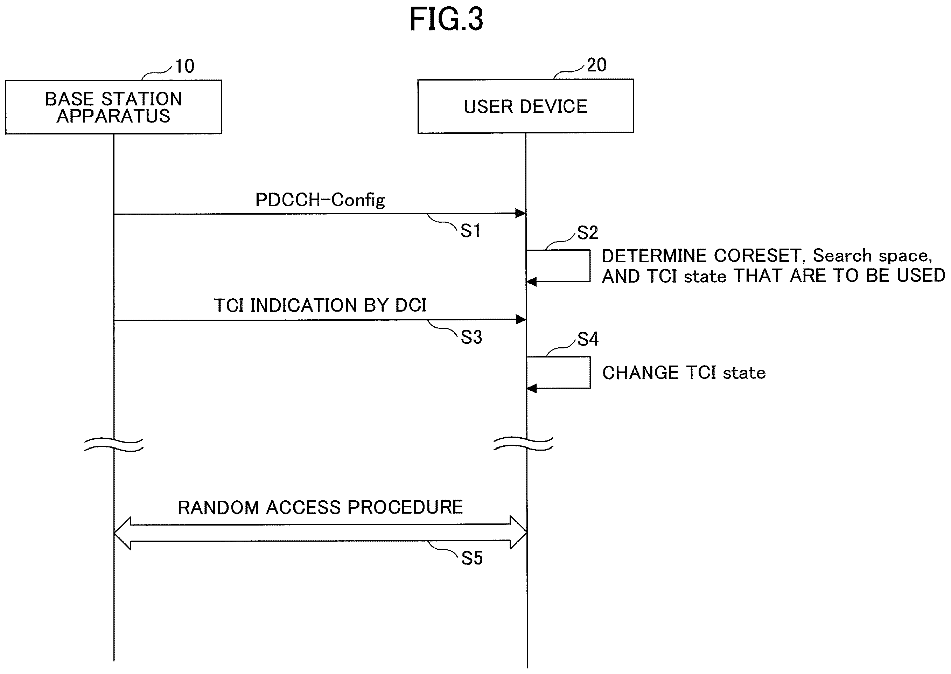

FIG. 3 is a sequence diagram for explaining an example of monitoring the control signal in the embodiment of the present invention. In Step S1, the base station apparatus 10 transmits a PDCCH-Config to the user device 20 via an RRC signaling. The PDCCH-Config includes information for receiving a PDCCH by the user device 20. The PDCCH-Config may be indicated to the user device 20 as broadcast information, and may be indicated to the user device 20 via another RRC signaling. The PDCCH-Config includes information for defining a control resource set and information for determining a search space.

In Step S2, the user device 20 determines, based on the PDCCH-Config received in Step S1, the control resource set, the search space, and the TCI state that are to be used. The user device 20 monitors the control information in the search space that is determined.

In Step S3, when information indicating that the PCI state is indicated by the DCI is included in the PDCCH-Config, the base station apparatus 10 can dynamically indicate the TCI state to the user device 20 by the DCI that is a PHY layer signaling. Subsequently, the user device 20 is changed into the indicated TCI state (step S4). Step S3 and Step S4 may or may not be performed.

In step S5, the random access procedure is executed by the base station apparatus 10 and the user device 20. The user device 20 assumes the QCL based on the SS block or the CSI-RS selected for transmitting the PRACH, and monitors the control information. Note that there is no restriction on the order of execution for steps S1 to S4 and step S5. Either steps S1 to S4 or step S5 may be executed first.

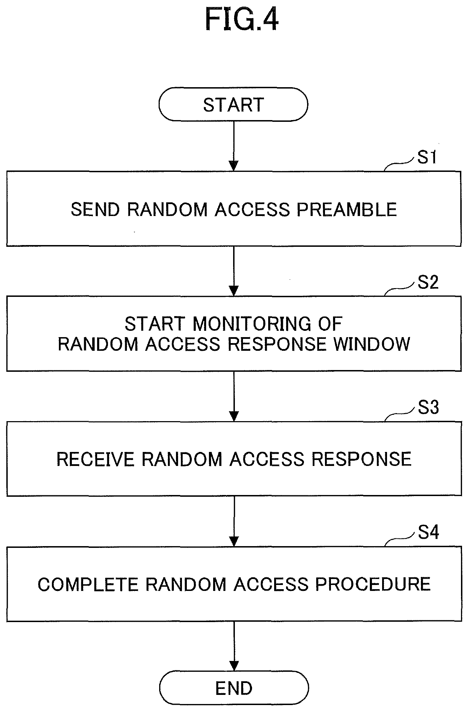

FIG. 4 is a flowchart for explaining an example of monitoring the control signal in the embodiment of the present invention. Using FIG. 4, an operation in the user device 20 for the random access procedure in step S5 shown in FIG. 3 will be explained.

In Step S1, the user device 20 assumes the QCL based on the SS block or the CSI-RS selected for transmitting the PRACH or assume the QCL based on the TCI relation assumed in the search space for random access, and transmits the random access preamble to the base station apparatus 10. Alternatively, for the random access procedure which is triggered by the PDCCH order, the user device 20 may assume the QCL based on the SS block specified by the PDCCH, and transmit the random access preamble to the base station apparatus 10. At the timing of transmitting the random access preamble, the user device 20 switches the TCI state of the CORESEt#0 to coincide with the described assumed QCL, and monitor the control signal corresponding to the CORESET#0 in the search space. That is, at the timing of transmitting the random access preamble, the user device 20 may switch the monitoring timing of the CORESET#0 and the QCL assumption according to the SS block or the CSI-RS that assumes the described QCL. Note that at the timing of transmitting the random access preamble, the user device 20 may switch the TCI state of the control resource set with the exception of the CORESET#0 so as to coincide with the described assumed QCL, and monitor the control signal corresponding to the control resource set in the search space. The timing of transmitting the random access preamble may include a timing of retransmitting the random access preamble. When the random access preamble is retransmitted, the user device 20 may switch the selected SS block or the CSI-RS. Thus, the user device 20 may be changed to a TCI state that is different from the TCI state before retransmitting.

In step S2, the user device 20 starts monitoring of a random access response window for receiving a random access response from the base station apparatus 10. At the time point at which monitoring of the random access response window is started, the user device 20 may switch the TCI state of the CORESET#0 so as to coincide with the QCL assumed in the described step S1, and monitor the control signal corresponding to the CORESET#0 in the search space. That is, at the timing of starting monitoring of the random access response window, the user device 20 may switch the monitoring timing of the CORESET#0 and the QCL assumption according to the SS block or the CSI-RS that assumes the described QCL. Note that at the timing of starting monitoring of the random access response window, the user device 20 may switch the TCI state of the control resource set with the exception of the CORESET#0 so as to coincide with the QCL assumed in the described step S1, and monitor a control signal corresponding to the control resource set in the search space. The timing of starting monitoring of the random access response window may include a timing of starting monitoring of the random access response window when the random access preamble is retransmitted. Similar to step S1, when the random access preamble is retransmitted, because the user device 20 may switch the selected SS block or the CSI-RS, the user device 20 may be changed to a TCI state that is different from the TCI state before retransmitting.

In step S3, the user device 20 receives a random access response from the base station apparatus 10. At the timing of receiving the random access response, the user device 20 may switch the TCI state of the CORESET#0 so as to coincide with the QCL assumed in the described step S1, and monitor the control signal corresponding to the CORESET#0 in the search space. As a more detailed timing, when the PDCCH for scheduling the random access response is decoded, at the timing of detecting that an RA-RNTI (Random access - Radio network temporary identifier) coincides with the random access preamble transmitted by the user device 20, the user device 20 may switch the TCI state of the CORESET#0 so as to coincide with the QCL assumed in the described step S1. That is, at the timing of receiving the random access response including the described more detailed timing, the user device 20 may switch the monitoring timing of the CORESET#0 and the QCL assumption according to the SS block or the CSI-RS that assumes the described QCL. Note that at the timing of receiving the random access response including the more detailed timing, the user device 20 may switch the TCI state of the control resource set with the exception of the CORESET#0 so as to coincide with the QCL assumed in the described step S1, and monitor the control signal corresponding to the control resource set in the search space.

In step S4, the user device 20 completes the random access procedure. At the timing of completing the random access procedure, the user device 20 may switch the TCI state of the CORESET#0 so as to coincide with the QCL assumed in the described step S1, and monitor the control signal corresponding to the CORESET#0 in the search space. That is, at the timing of completing the random access procedure, the user device 20 may switch the monitoring timing of the CORESET#0 and the QCL assumption according to the SS block or the CSI-RS that assumes the described QCL. For example, the timing of completing the random access procedure may be for the conflict type random access, a timing that the user device 20 receives a conflict solution (message 4) from the base station apparatus 10. The timing of completing the random access procedure may be, for the non-conflict type random access, a timing that the user device 20 receives the random access response (message 2). Alternatively, the timing of completing the random access procedure may be after receiving a configuration signal from the base station apparatus after the message 2 or the message 4. Note that at the timing of completing the random access procedure, the user device 20 may switch the TCI state of the control resource set with the exception of the CORESET#0 so as to coincide with the QCL assumed in the described step S1, and monitor the control signal corresponding to the control resource set in the search space.

According to the described example, in the random access procedure, the user device 20 switches the TCI state based on the random access, and the user device 20 can monitor the control signal corresponding to the control resource set in the search space.

That is, in the wireless communication system, the user device can appropriately perform monitoring of the control signal transmitted from the base station apparatus.

### (Configuration of device)

Next, an example of configuration of function of the base station apparatus 10 and the user device 20 that perform the processes and operations, which have been described, will be described. The base station apparatus 10 and the user device 20 include functions for implementing the described example. However, each of the base station apparatus 10 and the user device 20 may include only a part of the function in the example.

### <Base station apparatus 10>

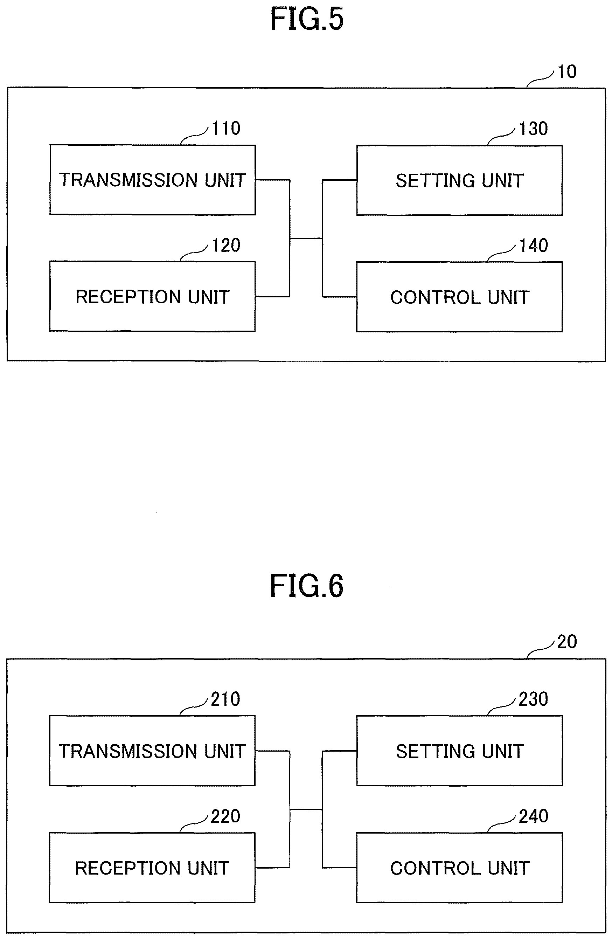

FIG. 5 is a diagram depicting an example of a function configuration of the base station apparatus 10. As shown in FIG. 5, the base station apparatus 10 includes a transmission unit 110, a reception unit 120, a setting unit 130, and a control unit 140. The function configuration shown in FIG. 5 is merely an example. As long as the operation relating to the embodiment of the present invention can be performed, a function division and a name of the function part are not limited.

The transmission unit 110 includes a function of generating a signal to be transmitted to the user device 20 side, and wirelessly transmitting the signal. The reception unit 120 includes a function of receiving various signals transmitted from the user device 20, and acquiring, for example, information of higher layer from the received signal. Moreover, the transmission unit 110 includes a function of transmitting an NR-PSS, an NR-SSS, an NR-PBCH, a DL/UL control signal, or the like to the user device 20.

The setting unit 130 stores predetermined setting information and various pieces of setting information to be transmitted to the user device 20 into a storage device, and reads out the information from the storage device as necessary. Contents of the setting information are, for example, control information for the user device 20 and information relating the random access.

The control unit 140, as explained in the example, generates the control information to be transmitted to the user device. Moreover, the control unit 140 controls the random access procedure with the user device 20. A function part of the control unit 140 related to the transmission of signals may be included in the transmission unit 110. A function part of the control unit 140 related to the reception of signals may be included in the reception unit 120.

### <User device 20>

FIG. 6 is a diagram depicting an example of a function configuration of the user device 20. As shown in FIG. 6, the user device 20 includes a transmission unit 210, a reception unit 220, a setting unit 230, and a control unit 240. The function configuration shown in FIG. 6 is merely an example. As long as the operation relating to the embodiment of the present invention can be performed, a function division and a name of the function part are not limited.

The transmission unit 210 prepares transmission signal from transmission data, and wirelessly transmits the transmission signal. The reception unit 220 receives various signals, and acquires a signal of higher layer from a received signal of the physical layer. Moreover, the reception unit 220 has a function of receiving the NR-PSS, the NR-SSS, the NR-PBCH, the DL/UL/SL control signal, or the like, transmitted from the base station apparatus 10. Moreover, for example, the transmission unit 210, as a D2D communication, transmits a PSCCH (Physical Sidelink Control Channel), a PSSCH (Physical Sidelink Shared Channel), a PSDCH (Physical Sidelink Discovery Channel), or a PSBCH (Physical Sidelink Broadcast Channel) to another user device 20. The reception unit 120 receives a PSCCH, a PSSCH, a PSDCH or a PSBCH from another user device 20.

The setting unit 230 stores various pieces of setting information received by the reception unit 220 from the base station apparatus 10 or the user device 20 into a storage device, and reads out the information from the storage device as necessary. Moreover, the setting unit 230 also stores predetermined setting information. Contents of the setting information are, for example, control information for the user device 20 and information relating the random access.

The control unit 240, as explained in the example, monitors the control signal, based on the control information acquired from the base station apparatus 10. Moreover, the control unit 240 controls the random access procedure with the base station apparatus 10. A function part of the control unit 240 related to the transmission of signals may be included in the transmission unit 210. A function part of the control unit 240 related to the reception of signals may be included in the reception unit 220.

### (Hardware configuration)

Drawings of functional configuration used for the described explanation of the embodiment of the present invention (FIG. 5 and FIG. 6) show blocks of functional units. These functional blocks (configuration units) are achieved by combination of hardware and/or software. Moreover, implementation means for each functional block is not particularly limited. That is, each functional block may be achieved by one device in which a plurality of elements are combined physically and/or logically. Moreover, each functional block may be achieved by a plurality of devices, which are separated physically and/or logically, and connected directly and/or indirectly (e.g. wiredly and/or wirelessly) with each other.

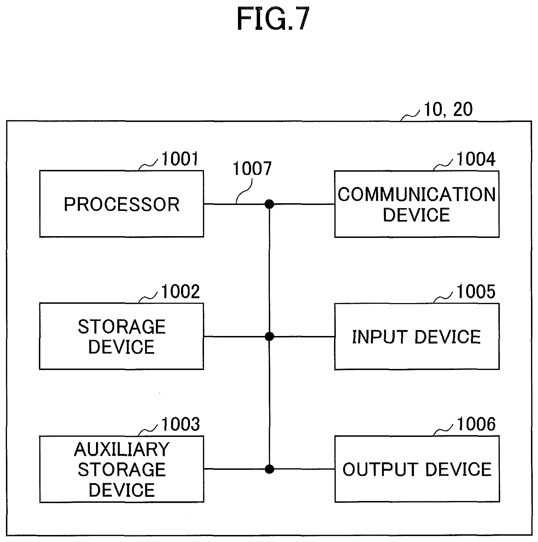

Moreover, for example, both the base station apparatus 10 and the user device 20, according to the embodiment of the present invention, may function as computers that perform processing related to the embodiment of the present invention. FIG. 7 is a diagram depicting an example of a hardware configuration of a wireless communication device that is the base station apparatus 10 or the user device 20 according to the embodiment of the present invention. Each of the described base station apparatus 10 and the user device 20 may be physically configured as a computer including a processor 1001, a storage device 1002, an auxiliary storage device 1003, a communication device 1004, an input device 1005, an output device 1006, a bus 1007 and the like.

Note that, in the following explanation, the term "device" can be replaced by a circuit, a unit, or the like. The hardware configuration of the base station apparatus 10 and the user device 20 may include one or more devices of each of the devices indicated by reference numerals of 1001 to 1006 shown in FIG. 7. Alternatively, the hardware configuration may not include a part of the devices.

Each function of the base station apparatus 10 and the user device 20 may be achieved by loading predetermined software (program) on hardware such as the processor 1001 or the storage device 1002. The processor 1001 performs arithmetic operation to control a communication by the communication device 1004, and a reading/writing data from/into the storage device 1002 and the auxiliary storage device 1003.

The processor 1001 controls the entire computer by, for example, causing the operating system to operate. The processor 1001 may include a central processing unit (CPU) including an interface to peripheral devices, a control device, an arithmetic device, a register, or the like.

Moreover, the processor 1001 reads out a program (program code), a software module, or data from the auxiliary storage device 1003 and/or the communication device 1004 to the storage device 1002, and performs various processes according to the program, software module or data. For the program, a program that causes the computer to execute at least a part of the operations explained in the described embodiment. For example, the transmission unit 110, the reception unit 120, the setting unit 130, and the control unit 140 of the base station apparatus 10, shown in FIG. 5, may be achieved by a control program that is stored in the storage device 1002 and operates in the processor 1001. Moreover, for example, the transmission unit 210, the reception unit 220, the setting unit 230 and the control unit 240 of the user device 20, shown in FIG. 6, may be achieved by a control program that is stored in the storage device 1002 and operates in the processor 1001. The described various processes have been explained to be performed by one processor 1001. However, the processes may be performed by two or more processors 1001 simultaneously or sequentially. The processor 1001 may be implemented by one or more chips. Note that the program may be transmitted from a network via an electric communication line.

The storage device 1002 is a computer readable recording medium. For example, the storage device 1002 may include at least one of a ROM (Read Only Memory), an EPROM (Erasable Programmable ROM), an EEPROM (Electrically Erasable Programmable ROM) and a RAM (Random Access Memory). The storage device 1002 may also be referred to as a register, a cache, a main memory (main storage device), or the like. The storage device 1002 can store a program (program code), a software module, or the like that can be executed in order to perform the process according to the embodiment of the present invention.

The auxiliary storage device 1003 is a computer readable recording medium. For example, the auxiliary storage device 1003 may include at least one of an optical disk such as a CD-ROM (Compact Disc ROM), a hard disk drive, a flexible disk, a magneto-optical disk (e.g. a compact disc, a digital versatile disk, a Blu-ray (trademark registered) disk), a smart card, a flash memory (e.g. a card, a stick and a key drive), a floppy (trademark registered), a magnetic strip, and the like. The auxiliary storage device 1003 may also be referred to as an auxiliary storage device. The described storage medium may be, for example, a database, a server, or another appropriate medium, including the storage device 1002 and/or the auxiliary storage device 1003.

The communication device 1004 is hardware (transmission/reception device) for performing communication between computers via a wired and/or wireless network. For example, the communication device 1004 may be also referred to as a network device, a network controller, a network card, or a communication module. For example, the transmission unit 110 and the reception unit 120 of the base station apparatus 10 may be achieved by the communication device 1004. Moreover, the transmission unit 210 and the reception unit 220 of the user device 20 may be achieved by the communication device 1004.

The input device 1005 is an input device for accepting an input from outside (e.g. a keyboard, a mouse, a microphone, a switch, a button, a sensor, or the like). The output device 1006 is an output device for performing an output to the outside (e.g. a display, a speaker, an LED lamp, or the like). Note that the input device 1005 and the output device 1006 may be integrated (e.g. a touch panel).

Moreover, the respective devices including the processor 1001, the storage device 1002 and the like are connected via the bus 1007 for communicating information. The bus 1007 may include a single bus, or buses different for the devices.

Moreover, each of the base station apparatus 10 and the user device 20 may include a microprocessor, a digital signal processor (DSP), an ASIC (Application Specific Integrated Circuit), a PLD (Programmable Logic Device), a FPGA (Field Programmable Gate Array), or the like. A part of or an entirety of each functional block may be achieved by the hardware. For example, the processor 1001 may be implemented in at least one of the hardware.

### (Summary of the embodiment)

As described above, according to the embodiment of the present invention, a user device including a control unit configured to determine a control resource set, a search space and a transmission control instruction state corresponding to a control signal to be monitored, the determination being based on information relating a setting for receiving the control signal; and a reception unit configured to switch the transmission control instruction state while performing a random access procedure, and monitoring a control signal corresponding to the control resource set, in the search space, is provided.

According to the described configuration, the user device 20 can switch a TCI state based on the random access, in the random access procedure, and monitor the control signal corresponding to the control resource set in the search space. That is, in a wireless communication system, the user device can monitor a control signal transmitted from a base station apparatus appropriately.

At a time point at which a random access preamble in the random access procedure is transmitted, the reception unit may switch the transmission control instruction state, and monitor the control signal corresponding to the control resource set in the search space. According to the configuration, the user device 20 can switch the TCI state at the timing of transmitting the random access preamble.

At a timing of starting a random access response window for receiving a random access response in the random access procedure, the reception unit may switch the transmission control instruction state, and monitor the control signal corresponding to the control resource set in the search space. According to the configuration, the user device 20 can switch the TCI state, at the timing of starting the random access response window.

At the time point at which the random access response in the random access procedure is received, the reception unit may switch the transmission control instruction state, and monitor the control signal corresponding to the control resource set in the search space. According to the configuration, the user device 20 can switch the TCI state at the timing of receiving the random access response.

At the timing of completing the random access procedure, the reception unit may switch the transmission control instruction state, and monitor the control signal corresponding to the control resource set in the search space. According to the configuration, the user device 20 can switch the TCI state at the timing of completing the random access procedure.

Moreover, according to the embodiment of the present invention,
a base station apparatus including a control unit configured to determine a control resource set, a search space and a transmission control instruction state corresponding to a control signal to be monitored, the determination being based on information relating a setting for receiving the control signal; and a transmission unit configured to switch the transmission control instruction state while performing a random access procedure, and transmitting the control signal corresponding to the control resource set in the search space, is provided.

According to the described configuration, the user device 20 can switch the TCI state based on the random access in the random access procedure, and monitor the control signal corresponding to the control resource set in the search space. That is, in the wireless communication system, the user device can monitor the control signal transmitted from the base station apparatus appropriately.

### (Supplement to the embodiment)

As described above, the embodiment of the present invention has been described. In order to promote understanding the invention, the embodiment has been described using an example with concrete values. However, unless otherwise stated, the values are merely an example, and any appropriate values may be used. A classification of items in the described explanation is not essential in the present invention, matters described in two or more items may be combined and used as necessary. Matters described in an item may be applied to matters described in another item (so far as they are not inconsistent with each other). A boundary of functional units or processing units in the functional block diagram does not necessarily correspond to a physical boundary of parts. An operation of a plurality of functional units may be physically performed in a single part. Alternatively, an operation of a single functional unit may be physically performed in a plurality of parts. With respect to the processing procedure described in the embodiment, the order of processing may be changed as long as an inconsistency does not occur. For convenience of explanation of processing, the base station apparatus 10 and the user device 20 have been described using a functional block diagram. However, such a device may be achieved by hardware, by software, or by a combination thereof. Each of software that operates by the processor included in the base station apparatus 10 according to the embodiment of the present invention, and software that operates by the processor included in the user device 20, may be stored in any appropriate recording medium, such as a random access memory (RAM), flash memory, a read only memory (ROM), an EPROM, an EEPROM, a register, a Hard Disk (HDD), a removable disk, a CD-ROM, a database or a server.

Moreover, a notification/indication of information is not limited to the mode/embodiment explained in the specification, and may be performed by using another method. For example, the notification/indication of information may be performed by a physical layer signaling (e.g. DCI (Downlink Control Information), or UCI (Uplink Control Information)), an upper layer signaling (e.g. an RRC (Radio Resource Control) signaling, or a MAC (Medium Access Control) signaling), broadcast information (an MIB (Master Information Block), an SIB (System Information Block)), other signals, or a combination thereof. Moreover, the RRC signaling may be referred also to as an RRC message, and may be an RRC connection setup message, an RRC connection reconfiguration message, or the like.

Each mode/embodiment explained in the present specification may be applied to the LTE (Long term Evolution), the LTE-A (LTE-Advanced), the SUPER 3G, the IMT-Advanced, the 4G, the 5G, the FRA (Future Radio Access), the W-CDMA (trademark registered), the GSM (trademark registered), the CDMA2000, the UMB (Ultra Mobile Broadband), the IEEE 802.11 (Wi-Fi), IEEE 802.16 (WiMAX), the IEEE 802.20, the UWB (Ultra-WideBand), the Bluetooth (trademark registered), systems using other appropriate systems and/or next generation systems extended based on the other appropriate systems.

With respect to the processing procedure, the sequence, the flowchart, or the like of each mode/embodiment described in the present specification, the order of processing may be changed, as long as an inconsistency does not occur. For example, with respect to the method explained in the present specification, various elements of step are presented in an exemplary order, and the method is not limited to the presented specific order.

In the present specification, a specific operation performed by the base station apparatus 10 may be performed, in some cases, by an upper node thereof. It is clear that, in a network including one or a plurality of network node having the base station apparatus 10, various operations performed for communicating with the user device 20 can be performed by the base station apparatus 10 and/or another network node with the exception of the base station apparatus 10 (For example, the MME, the S-GW, or the like is contemplated. But the network node is not limited to them). In the present specification, the case where one network node is present as another network node with the exception of the base station apparatus 10 is exemplified. A combination of a plurality of other network nodes (e.g. the MME and S-GW) may be presented.

Each mode/embodiment explained in the present specification may be used singly, may be combined with each other to be used, or may be switched to be used when the process is performed.

The user device 20 may be referred, by a person skilled in the art, to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

The base station apparatus 10 may be referred, by a person skilled in the art, to as an NB (NodeB), an eNB (evolved NodeB), a gNB, a Base Station, or some other appropriate terms.

The term "determining" used in the present specification may include a wide variety of operations. The term "determining" can include, for example, regarding judging, calculating, computing, processing, deriving, investigating, looking up (e.g. looking up in a table, a database, or a different data structure), or ascertaining, as "determining", or the like. Moreover, the term "determining" can include regarding receiving, (e.g. receiving information), transmitting (e.g. transmitting information), inputting, outputting, or accessing (e.g. accessing data in a memory), as "determining" or the like. Moreover, the term "determining" can include regarding resolving, selecting, choosing, establishing, comparing, or the like as "determining". That is, the term "determining" can include regarding some operation as "determining".

The phrase "based on" used in the present specification, unless clearly indicated in particular, does not mean "based on only". In other words, the phrase "based on" means both "based on only" and "based on at least".

As long as terms "include" and "including" and their variations are used in the present specification and claims, these terms are intended to be inclusive, in the same as the term "comprising". Furthermore, the term "or" used in the present specification and claims is not intended to be an exclusive OR.

Over the entirety of the present disclosure, for example, when articles are added in the translation such as "a", "an" and "the" in English, these articles can include plural, unless clearly otherwise indicated from context.

Note that in the embodiment of the present invention, the TCI state is an example of the transmission control instruction state.

As described above, the present invention has been described in detail. For a person skilled in the art, it is clear that the present invention is not limited to the embodiment described in the present specification. The present invention can be implemented as a modification without departing from the meaning and the scope of the present invention defined by the claims. Thus, the description of the present specification aims at illustration and explanation, and does not have any restrictive meaning for the present invention.

### Reference signs list

- 10: base station apparatus
- 110: transmission unit
- 120: reception unit
- 130: setting unit
- 140: control unit
- 20: user device
- 210: transmission unit
- 220: reception unit
- 230: setting unit
- 240: control unit
- 1001: processor
- 1002: storage device
- 1003: auxiliary storage device
- 1004: communication device
- 1005: input device
- 1006: output device

## Claims

1. A terminal (20) comprising:
a control unit (240) configured to assume, based on a synchronization signal, SS, block selected during a random access procedure, a quasi co-located, QCL, relationship of a control resource set that corresponds to a control signal to be monitored; and
a reception unit (220) configured to monitor a control signal corresponding to the control resource set by switching to the assumed QCL relationship;
wherein, the reception unit (220) is further configured to, upon receiving a random access response, switch the QCL relationship.

2. A communication method comprising:
assuming, with a terminal (20), based on a synchronization signal, SS, block selected during a random access procedure, a quasi co-located, QCL, relationship of a control resource set that corresponds to a control signal to be monitored;
monitoring a control signal corresponding to the control resource set by switching to the assumed QCL relationship; and
upon receiving a random access response, switching the QCL relationship.

3. A communication system comprising:
a terminal (20) according to claim 1 and
a base station (10) configured to transmit the control signal.

## Patentansprüche

1. Endgerät (20), umfassend:
eine Steuereinheit (240), die konfiguriert ist, um basierend auf einem während einer Direktzugriffsprozedur ausgewählten Synchronisierungssignal-, SS-, Block eine quasi zusammengelegte, QCL, Beziehung eines Steuerressourcensatzes anzunehmen, der einem zu überwachenden Steuersignal entspricht; und
eine Empfangseinheit (220), die konfiguriert ist, um ein dem Steuerressourcensatz entsprechendes Steuersignal durch Umschalten auf die angenommene QCL-Beziehung zu überwachen;
wobei die Empfangseinheit (220) weiter konfiguriert ist, um beim Empfang einer Direktzugriffsantwort die QCL-Beziehung umzuschalten.

2. Kommunikationsverfahren, umfassend:
Annehmen, mit einem Endgerät (20), einer quasi zusammengelegten, QCL, Beziehung eines Steuerressourcensatzes, der einem zu überwachenden Steuersignal entspricht, basierend auf einem während einer Direktzugriffsprozedur ausgewählten Synchronisierungssignal-, SS-, Block;
Überwachen eines dem Steuerressourcensatz entsprechenden Steuersignals durch Umschalten auf die angenommene QCL-Beziehung; und
beim Empfang einer Direktzugriffsantwort, Umschalten der QCL-Beziehung.

3. Kommunikationssystem, umfassend:
ein Endgerät (20) nach Anspruch 1 und
eine Basisstation (10), die konfiguriert ist, um das Steuersignal zu übertragen.

## Revendications

1. Terminal (20) comprenant :
une unité de commande (240) configurée pour supposer, sur la base d'un bloc de signal de synchronisation, SS, sélectionné lors d'une procédure d'accès aléatoire, une relation quasi co-localisée, QCL, d'un ensemble de ressources de commande qui correspond à un signal de commande à surveiller ; et
une unité de réception (220) configurée pour surveiller un signal de commande correspondant à l'ensemble de ressources de commande en commutant sur la relation QCL supposée ;
dans lequel l'unité de réception (220) est également configurée pour, lors de la réception d'une réponse d'accès aléatoire, commuter la relation QCL.

2. Procédé de communication comprenant :
la supposition, avec un terminal (20), sur la base d'un bloc de signal de synchronisation, SS, sélectionné lors d'une procédure d'accès aléatoire, d'une relation quasi co-localisée, QCL, d'un ensemble de ressources de commande qui correspond à un signal de commande à surveiller ;
la surveillance d'un signal de commande correspondant à l'ensemble de ressources de commande en commutant sur la relation QCL supposée ; et
lors de la réception d'une réponse d'accès aléatoire, la commutation de la relation QCL.

3. Système de communication comprenant :
un terminal (20) selon la revendication 1 et
une station de base (10) configurée pour transmettre le signal de commande.
